# EUROPEAN PATENT SPECIFICATION

(11) **EP 4 329 048 B1**
(45) Date of publication and mention of the grant of the patent: **21.01.2026**
(21) Application number: 23792114.3
(22) Date of filing: 14.04.2023
(51) Int. Cl.: H01M 10/659, H01M 10/654, H01M 10/647, H01M 10/613, H01M 50/383, H01M 50/224, H01M 50/209, H01M 50/105, H01M 50/557, H01M 50/548

(54) **PRISMATIC SECONDARY BATTERY**
PRISMATISCHE SEKUNDÄRBATTERIE
BATTERIE SECONDAIRE PRISMATIQUE

(30) Priority: 18.04.2022 KR 20220047711
(43) Date of publication of application: 28.02.2024
(73) Proprietor: LG ENERGY SOLUTION, LTD., Seoul 07335 (KR)
(72) Inventor: LEE, Yong Ho, Daejeon 34122 (KR); LEE, Jin Kyu, Daejeon 34122 (KR); HWANG, Won Pill, Daejeon 34122 (KR); KIM, Soo Han, Daejeon 34122 (KR); YOON, Doo Han, Daejeon 34122 (KR); SON, Chang Keun, Daejeon 34122 (KR); KONG, Seung Jin, Daejeon 34122 (KR)
(74) Representative: Plasseraud IP
(86) International application number: PCT/KR2023/005131
(87) International publication number: WO 2023/204537

(56) References cited:
- WO-A1-2018/052209
- JP-A- 2012 119 137
- KR-A- 20090 038 382
- KR-A- 20110 084 959
- KR-A- 20180 031 136
- KR-A- 20190 082 974
- KR-A- 20210 127 415
- US-A1- 2014 224 465

## Description

### [Technical Field]

The present technology relates to a prismatic secondary battery capable of suppressing thermal propagation phenomenon where surrounding secondary batteries consecutively overheat when thermal runaway occurs.

This application claims the benefit of priority based on Korean Patent Applications No. 10-2022-0047711, filed on April 18, 2022.

### [Background Art]

Unlike primary batteries, secondary batteries are rechargeable and have been extensively researched and developed recently due to potential for miniaturization and high capacity applications. With the increasing technological advancements and demand for mobile devices, as well as the growing prominence of electric vehicles and energy storage systems in response to environmental concerns, the demand for secondary batteries as an energy source is rapidly and significantly increasing.

Depending on the shape of the battery case, secondary batteries are classified into coin-type batteries, cylindrical batteries, prismatic batteries, and pouch-type batteries. The electrode assembly, which is installed inside the battery case in secondary batteries, is a power generation element capable of charge and discharge. It has a laminated structure of electrodes and separators.
Secondary batteries require continuous usage for extended periods, so there is a need to effectively control the heat generated during the charging and discharging processes. If the cooling of the secondary battery is not efficiently achieved, it can lead to an increase in temperature, which in turn causes an increase in current. This increase in current causes the temperature to rise again, creating a feedback chain reaction that eventually leads to the catastrophic condition of thermal runaway.

In addition, when secondary batteries are grouped together as modules or packs, the thermal runaway of one secondary battery can lead to thermal propagation, which is a phenomenon in which other neighboring secondary batteries continuously overheat. Furthermore, there is a high risk of fire due to flammable gases emitted from overheated secondary batteries and ignition sources such as heated electrodes, so it is necessary to suppress this ignition risk.
Document US 2014/224465 A1 relates to a thermal barrier system that resides between neighbouring cells of a battery pack in order to prevent propagation of thermal runaway through the cells of a battery pack. Document KR 2021 0127415 A relates to a battery pack.

Document WO 2018/052209 A1 relates to a secondary battery in which the spark is not discharged to the outside of the vent hole.

### [Prior Art Documents]

(Patent Document 001) Korean Patent Laid-Open No. 10-1270796 (published on June 05, 2013)

### [Description of the Invention]

### [Technical Problem]

The present technology aims to provide a secondary battery that effectively suppresses and prevents thermal propagation caused by thermal runaway in the secondary battery.

However, the technical problems to be solved by the present technology are not limited to the above-described problem, and other problems not mentioned can be clearly understood by those skilled in the art from the following description of the present invention.

### [Technical Solution]

The present technology relates to a prismatic secondary battery, and in one example, it includes: a case; at least one battery cell accommodated within the case; and at least one heat-absorbing pouch in contact with the battery cells, wherein the at least one heat-absorbing pouch includes: an absorbent material impregnated with a liquid that vaporizes by absorbing the heat; and a pouch that seals and accommodates the absorbent material.

In an exemplary embodiment of the present invention, the at least one battery cell is a plurality of battery cells, and the at least one heat-absorbing pouch is arranged between the plurality of battery cells.

Furthermore, the at least one heat-absorbing pouch is provided with a vulnerable part that is designed to rupture when the liquid impregnated in the absorbent material is vaporized, leading to an increase in internal pressure.

In the present invention, the at least one battery cell is a pouch-type battery cell.

In addition, opposite ends of the at least one battery cell each have a protruding electrode lead, and the vulnerable part of the at least one heat-absorbing pouch is disposed at each end corresponding to the electrode leads.

For example, the vulnerable part of the at least one heat-absorbing pouch may be disposed at a position corresponding to the electrode leads.

In an exemplary embodiment of the present invention, the absorbent material may be a super absorbent matrix.

In one example, the super absorbent matrix may include a super absorbent polymer (SAP) or super absorbent fiber (SAF).

Furthermore, the liquid is water mixed with an additive, and the additive may be a substance that reduces the surface tension of water, or may be a fire extinguishing agent.

According to another exemplary embodiment of the present invention, the case may be equipped with a vent may be disposed on both ends of the case corresponding to the electrode leads.

In addition, a baffle with a plurality of through holes may be disposed between the vent and the at least one heat-absorbing pouch.

Furthermore, it may be desirable for the baffles to form a convex curved surface toward the vent.

### [Advantageous Effects]

According to the prismatic secondary battery of the present invention with the configuration as described above, the prismatic secondary battery can rapidly absorb and dissipate heat in high-temperature environments such as fast charging, effectively suppressing thermal runaway, and maintaining performance and lifespan without significant temperature rise.
In addition, when thermal runaway occurs in the secondary battery, the liquid absorbed in the absorbent material within the heat-absorbing pouch absorbs heat and vaporizes, and when the vaporized gas rises above a certain pressure, the present invention ruptures the heat-absorbing pouch, which can greatly reduce the risk of fire by cooling the flammable gas emitted from the overheated battery cell and the ignition source such as heated electrodes and suppressing the flame.

However, advantageous effects of the present technology are not limited to those mentioned above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, thereby the present invention is not to be construed as limited to that is described in such drawings.
FIG. 1 is a diagram illustrating a prismatic secondary battery according to an exemplary embodiment of the present invention.
FIG. 2 is an exploded perspective view illustrating a detailed configuration of the prismatic secondary battery shown in FIG. 1.
FIG. 3 is a cross-sectional view taken along the "A-A" line in FIG. 1.
FIG. 4 is a diagram illustrating the state where a gas discharged from a heat-absorbing pouch cools down an ignition source emitted from a battery cell.
FIG. 5 is a diagram illustrating another exemplary embodiment of a prismatic secondary battery according to the present invention.
FIG. 6 is a diagram illustrating the state where an ignition source emitted from a battery cell is cooled in another exemplary embodiment of the present invention.

### [Best Mode for Carrying Out the invention]

The present invention may have various modifications and various examples, and thus specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a prismatic secondary battery, and in one example, it includes: a metallic case, at least one or more battery cells accommodated within the case, and at least one or more heat-absorbing pouches that come into contact with the battery cells.

Here, the heat-absorbing pouch includes: an absorbent material impregnated with a liquid that vaporizes by absorbing the heat generated by the battery cells; and a pouch that seals and accommodates the absorbent material impregnated with the liquid.

In addition, the heat-absorbing pouch is equipped with a vulnerable part that is designed to rupture first the liquid impregnated in the absorbent material is vaporized, leading to an increase in internal pressure.

Accordingly, the present invention effectively suppresses thermal runaway by rapidly absorbing and dissipating heat in environments with high temperature rise, such as rapid charging, through the heat-absorbing action of the heat-absorbing pouch in contact with the battery cell, and maintains performance and lifespan without high temperature rise.

In addition, when thermal runaway occurs in the secondary battery, the liquid absorbed in the absorbent material within the heat-absorbing pouch absorbs heat and vaporizes, and when the vaporized gas rises above a certain pressure, the present invention ruptures the heat-absorbing pouch, which can greatly reduce the risk of fire by cooling the flammable gas emitted from the overheated battery cell and the ignition source such as heated electrodes and suppressing the flame.

### [Mode for Carrying Out the invention]

Hereinafter, specific embodiments of the present invention will be described in detail with reference to the accompanying drawings.

### (First Embodiment)

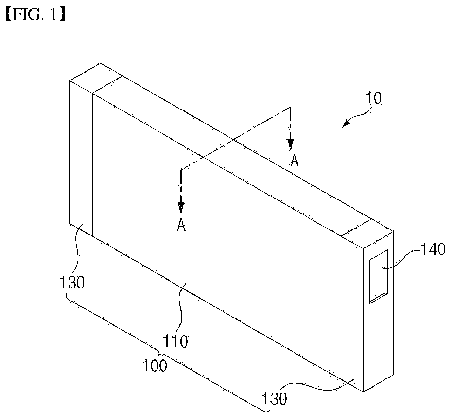

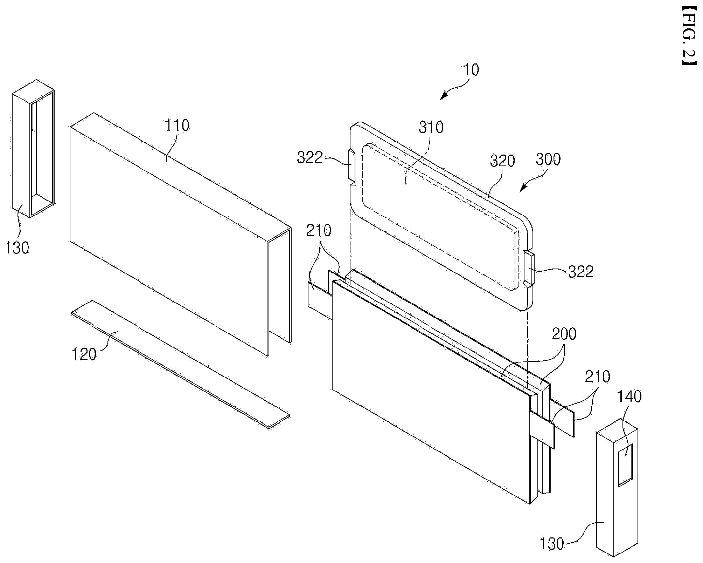

FIG. 1 is a diagram illustrating a prismatic secondary battery 10 according to the first embodiment of the present invention, and FIG. 2 is an exploded perspective view showing a detailed configuration of the prismatic secondary battery 10 of FIG. 1.

As shown in the diagrams, the present invention relates to a prismatic secondary battery 10 comprising a metal material case 100, at least one or more battery cells 200 accommodated within the case 100, and at least one or more heat-absorbing pouches 300 in contact with the battery cells 200.

The case 100 serves as a frame forming the body of the prismatic secondary battery 10, and can play a primary role in providing insulation for adjacent prismatic secondary batteries 10 when they form a battery module or a battery pack. In the illustrated exemplary embodiment, the case 100 consists of a main case 110 in the shape of a lowercase "N" of the English alphabet, a bottom plate 120 covering a lower opening of the main case 110, and side caps 130 closing both sides, and an electrode terminal 140 is exposed through an incision part formed in part of the side caps 130. The electrode terminal 140 is electrically connected to an electrode lead 210 of the battery cell 200.

The heat-absorbing pouch 300 that contacts the battery cell 200 serves primarily to absorb heat from the battery cell 200 to prevent overheating. The heat-absorbing pouch 300 also has a fire extinguishing function to suppress flames in the event of a thermal runaway event where the battery cell 200 overheats.

To this end, the heat-absorbing pouch 300 provided in the present invention includes a liquid-impregnated absorbent material 310 that absorbs heat generated by the battery cell 200 and vaporizes it, and a pouch 320 that seals and accommodates the liquid-impregnated absorbent material 310.

In the first embodiment of the present invention, the absorbent material 310 can be a super absorbent matrix, such as a Super Absorbent Polymer (SAP) or a Super Absorbent Fiber (SAF). The super absorbent matrix is porous or fibrous, capable of absorbing large amounts of liquid by exhibiting capillary action, while super absorbent fibers can be manufactured in the form of fibers such as nonwovens by processing super absorbent resins.

In the present invention, the specific types of super absorbent resins and super absorbent fibers made therefrom are not particularly limited, but can be used without restriction as long as they have a high absorption capacity for fluids, especially water. Examples of super absorbent resins in the present invention may include one or more selected from the group consisting of polyacrylic acid, polyacrylic salts, graft copolymers of polyacrylic salts, starch, crosslinked carboxymethylated cellulose, acrylic acid copolymers, hydrolyzed starch-acrylonitrile graft copolymers, starch-acrylic acid graft copolymers, saponified vinyl acetate-acrylic acid ester copolymers, hydrolyzed acrylonitrile copolymers, hydrolyzed acrylamide copolymers, polyethylene-maleic anhydride copolymers, isobutylenemaleic anhydride copolymers, polyvinyl sulfonic acid, polyvinyl phosphonic acid, polyvinyl imidazole, polyvinyl sulfate, sulfonated polystyrene, polyvinyl amine, polydialkylaminoalkyl(meth)acrylamides, polyethyleneimine, polyallylamine, polyallylguanidine, polydimethyldiallylammonium hydroxide, quaternized polystyrene derivatives, guanidine-modified polystyrene, quaternized poly(meth)acrylamides, polyvinyl guanidine, and mixtures thereof. Preferably, super absorbent resins may be, but are not limited to, one or more selected from the group consisting of crosslinked polyacrylic acid salts, crosslinked polyacrylic acid, and crosslinked acrylic acid copolymers.

In the present invention, the type of acrylic acid copolymer used as the super absorbent resin is not particularly limited, but may preferably be a copolymer including one or more comonomers selected from the group consisting of acrylic acid monomer, maleic acid, itaconic acid, acrylamide, 2-acrylamido-2-methylpropanesulfonic acid, 2-(meth)acryloyloxyethanesulfonic acid, 2-hydroxyethyl(meth)acrylate, and styrenesulfonic acid.

In the present invention, the super absorbent resin may have an absorption capacity for water in the range of 10 g/g to 500 g/g, and preferably 50 g/g to 200 g/g, but it is not limited thereto. That is, the super absorbent resin can absorb water in the range of 10 g to 500 g per 1 g of the resin, and preferably 50 g to 200 g per 1 g of the resin.

In the present invention, as the absorption capacity of the super absorbent resin for water increases, the duration of the cooling effect can be enhanced. However, if the absorption capacity exceeds 500 g/g, the flowability of the super absorbent resin may increase, making it difficult to maintain its shape and thereby preventing effective cooling, and if the absorption capacity is below 10 g/g, the duration of the cooling effect may be too short and inefficient.

Meanwhile, the liquid impregnating the absorbent material 310 in large quantities absorbs heat from the battery cell 200 and vaporizes when its temperature exceeds its boiling point. Due to the volume increase caused by the phase change from liquid to gas, pressure is generated within the pouch 320 sealing the absorbent material 310.

Here, the heat-absorbing pouch 300 is provided with a vulnerable part 322 that is designed to rupture first when the liquid impregnated in the absorbent material 310 vaporizes and increases the internal pressure. The pouch 320, which corresponds to the packaging material comprising the heat-absorbing pouch 300, may be manufactured using a flexible laminate sheet.

The laminate sheet may have a 3-layer or more structure, which includes an aluminum layer, an inner resin layer formed on the inner side of the aluminum layer, and an outer resin layer formed on the outer side of the aluminum layer. For example, the inner resin layer may be casted polypropylene (CPP) or polypropylene (PP), while the outer resin layer may be polyethylene terephthalate (PET) or nylon.

The vulnerable part 322 of the heat-absorbing pouch 300 preferentially rupture due to increased pressure resistance caused by vaporization of the liquid by locally reducing the sealing strength of the pouch 320. The pouch 320 may be sealed by heat fusing the edges of the laminate sheet surrounding the absorbent material 310, and the vulnerable part 322 may be formed in a manner that makes the heat fusion strength lower than the surrounding. For example, the vulnerable part 322 may be formed by reducing the strength by making it less thick than the surrounding or by forming a notch, or by locally removing an aluminum layer that maintains durability.

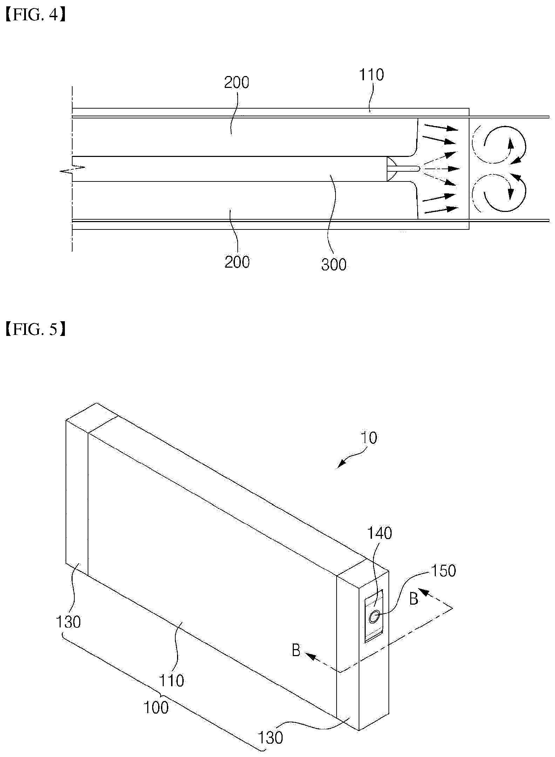

As such, by providing the vulnerable part 322 in the heat-absorbing pouch 300, as shown in FIG. 4, when the battery cell 200 overheats due to a thermal runaway phenomenon, the liquid impregnated with the absorbent material 310 in the heat-absorbing pouch 300 absorbs heat and vaporizes, and when the internal pressure of the vaporized gas rises above a certain pressure, the vulnerable part 322 of the heat-absorbing pouch 300 ruptures and emits gas. The gas emitted from the heat-absorbing pouch 300 can greatly reduce the risk of fire by cooling the flammable gas emitted from the overheated battery cell 200 and the ignition source such as the heated electrode and suppressing the flame.

In an exemplary embodiment of the present invention, the liquid impregnating the absorbent material 310 can be water. Water has the greatest specific and latent heat among any readily available liquid. Therefore, water impregnated in the absorbent material 310 is suitable for use in the heat-absorbing pouch 300 of the present invention because of the large amount of heat it absorbs during its phase change to a gas, starting before it is vaporized.

Additionally, the water impregnating the absorbent material 310 can be mixed with an additive to enhance its fire extinguishing function. For example, additives mixed with water may be substances that reduce the surface tension of water or may be a fire extinguishing agent. Examples of substances that reduce the surface tension of water include wetting agents or surfactants. When the surface tension of water is reduced, its penetrating effect increases, thereby enhancing the extinguishing effect on ignition sources such as heated electrodes or ignition particles.

The fire extinguishing agent refers to an agent that exhibits extinguishing capabilities on its own and can include various commercially available powder extinguishing agents or liquid extinguishing agents. For example, the fire extinguishing agent with the trade name F-500 EA (manufactured by HAZARD CONTROL TECHNOLOGIES, INC.) may be added to water.

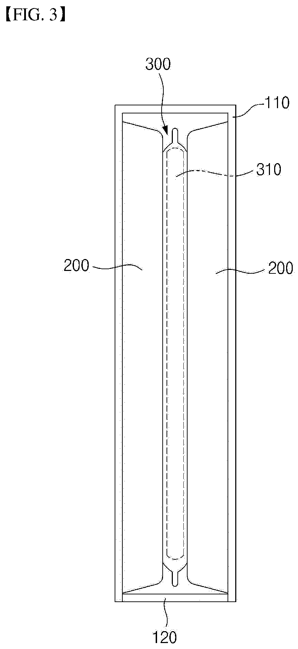

In the first embodiment of the present invention, when a plurality battery cells 200 are accommodated inside the case 100, the heat-absorbing pouch 300 can be placed between the battery cells 200. For example, when the battery cells 200 are provided in pairs, as shown in FIG. 2 to FIG. 4, the heat-absorbing pouch 300 can be inserted and disposed between the two battery cells 200. The heat-absorbing pouch 300 inserted between a plurality of battery cells 200 effectively suppresses the heat propagation between the battery cells 200.

In addition, in the first embodiment of the present invention, the battery cell 200 may be a pouch-type battery cell 200. The pouch-type battery cell 200 has a structure in which an electrode assembly and an electrolyte are embedded in a laminate sheet in the form of a pouch in which the electrode assembly can be accommodated, and the laminate sheet is sealed by applying heat and pressure to the vertically overlapping laminated sheets so that the electrode assembly is not exposed to the outside and there is no leakage of the electrolyte. Here, the laminate sheets used in the pouch-type battery cell 200 may form a multilayer structure similar to the laminate sheets of the heat-absorbing pouch 300 described above.

Each of the two opposing ends of the pouch-type battery cell 200 may have electrode leads 210 protruding therefrom. That is, the pouch-type battery cell 200 may form a bidirectional electrode structure, with the electrode leads 210 protruding out through the heatfused edge of the pouch case.

Since such a pouch-type battery cell 200 has a heat fusion structure, the sealing strength of the area through which the electrode lead 210 passes is relatively weak, and the electrode lead 210 is a component that is prone to overheating, when a thermal runaway occurs in the pouch-type battery cell 200, it is easy to start a release of high-temperature flammable gas, heated electrodes, etc. in the region of the electrode lead 210.

Therefore, in the first embodiment of the present invention, the vulnerable part 322 of the heat-absorbing pouch 300 can be positioned at both ends corresponding to the bidirectional arrangement of the electrode leads 210. In other words, by arranging the electrode leads 210 of the pouch-type battery cell 200 and the vulnerable part 322 of the heat-absorbing pouch 300 in the same direction, as illustrated in FIG. 4, the cooling and fire extinguishing functions of the heat-absorbing pouch 300 can be effectively exhibited.

If design permits, it may be desirable to position the vulnerable part 322 of the heat-absorbing pouch 300 as close as possible to a point corresponding to the electrode lead 210 to provide immediate cooling of high-temperature gases or the like emitted from the region of the electrode lead 210.

### (Second Embodiment)

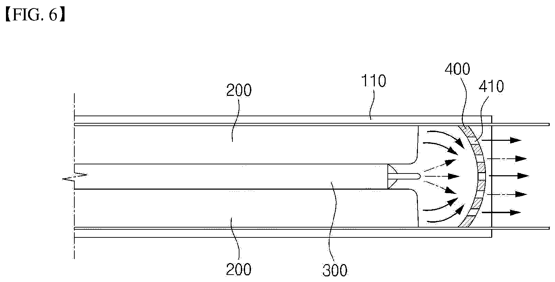

FIG. 5 is a diagram illustrating a prismatic secondary battery 10 according to the second embodiment of the present invention, and FIG. 6 is a diagram illustrating the state of cooling the ignition source emitted from the battery cell 200 in the second embodiment of the present invention.

The second embodiment illustrated is identical to the first embodiment described above in that the electrode leads 210 protrude from each of the two opposite ends of the pouch-type battery cell 200, and in addition, the venting part 150 provided in the case 100 are disposed at both ends of the case 100 corresponding to the electrode leads 210 of the pouch-type battery cell 200.

The venting part 150 has a configuration that acts as a safety valve to prevent structural collapse of the case 100 by discharging ignition sources, such as high-temperature gases emitted from the pouch-type battery cells 200 inside the case 100, and gases from the heat-absorbing pouch 300 that cool and extinguish them, to the outside. The venting part 150 may be structurally weakened by thinning or notching some areas of the case 100, or it may be implemented in a variety of ways, such as by attaching a separate venting device.

In the second embodiment of the present invention, a baffle 400 with a plurality of through holes 410 is disposed between the venting part 150 and the heat-absorbing pouch 300. The structure of the baffle 400 can be referred to in the cross-sectional view of FIG. 6 according to the "B-B" cutting line of FIG. 5.

The baffle 400 is configured to control the flow of high-temperature gases emitted from the pouch-type battery cell 200, and the gases in the heat-absorbing pouch 300 that cool and extinguish them, so that they are properly stagnant before exiting the venting part 150. As stagnation occurs in the gas flow on its way out of the venting part 150 of the case 100 through the through hole 410 formed in the baffle 400, the gas in the heat-absorbing pouch 300 is able to cool the ignition source such as the high-temperature gas for a sufficient period of time.

Furthermore, the cross-sectional shape of the baffle 400 allows it to form a convex curved surface toward the venting part 150, as shown in FIG. 6. Accordingly, the high-temperature flammable gas striking the baffle 400 and the gas in the heat-absorbing pouch 300 are encouraged to mix with each other in a swirling flow along the curved surface, and the mixing facilitated by the baffle 400 allows for more effective cooling while delaying the discharge of the ignition source.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [Reference numerals]

10: PRISMATIC SECONDARY BATTERY
100: CASE
110: MAIN CASE
120: LOWER PLATE
130: SIDE CAP
140: ELECTRODE TERMINAL
150: VENTING PART
200: BATTERY CELL (POUCH TYPE)
210: ELECTRODE LEAD
300: HEAT-ABSORBING POUCH
310: ABSORBENT MATERIAL
320: POUCH
322: VULNERABLE PART
400: BAFFLE
410: THROUGH HOLE

## Claims

1. A prismatic secondary battery (10) comprising:
a case (100);
at least one battery cell (200) accommodated within the case; and
at least one heat-absorbing pouch (300) in contact with the at least one battery cell (200),
wherein the at least one heat-absorbing pouch (300) comprises:
an absorbent material (310) impregnated with a liquid that vaporizes by absorbing heat; and
a pouch (320) that seals and accommodates the absorbent material (310); and
wherein the at least one heat-absorbing pouch (300) is provided with a vulnerable part (322) that is designed to rupture when the liquid impregnated in the absorbent material (310) is vaporized, leading to an increase in internal pressure;
wherein the at least one battery cell (200) is a pouch-type battery cell,
**characterized in that**
opposite ends of the at least one battery cell each have a protruding electrode lead (210), and
wherein the vulnerable part (322) of the at least one heat-absorbing pouch (300) is disposed at each end corresponding to the electrode leads (210).

2. The prismatic secondary battery (10) of claim 1, wherein the at least one battery cell (200) is a plurality of battery cells (200), and
wherein the at least one heat-absorbing pouch (300) is arranged between the plurality of battery cells (200).

3. The prismatic secondary battery of claim 1, wherein the vulnerable part (322) of the at least one heat-absorbing pouch (300) is disposed at a position corresponding to the electrode leads (210).

4. The prismatic secondary battery (10) of claim 1, wherein the absorbent material is a super absorbent matrix.

5. The prismatic secondary battery (10) of claim 4, wherein the super absorbent matrix comprises a Super Absorbent Polymer (SAP) or a Super Absorbent Fiber (SAF).

6. The prismatic secondary battery (10) of claim 5, wherein the liquid is water mixed with an additive, and
wherein the additive is a substance that reduces the surface tension of water, or a fire extinguishing agent.

7. The prismatic secondary battery (10) of claim 1, wherein the case (100) is equipped with a vent (150) on both ends of the case corresponding to the electrode leads (210).

8. The prismatic secondary battery (10) of claim 7, wherein a baffle (400) with a plurality of through holes (410) is disposed between the vent (150) and the at least one heat-absorbing pouch (300).

9. The prismatic secondary battery (10) of claim 8, wherein the baffle (400) forms a convex curved surface toward the vent (150).

## Patentansprüche

1. Prismatische Sekundärbatterie (10), umfassend:
ein Gehäuse (100);
wenigstens eine Batteriezelle (200), welche innerhalb des Gehäuses aufgenommen ist; und
wenigstens einen wärmeabsorbierenden Beutel (300), welcher in Kontakt mit der wenigstens einen Batteriezelle (200) ist,
wobei der wenigstens eine wärmeabsorbierende Beutel (300) umfasst:
ein absorbierendes Material (310), welches mit einer Flüssigkeit imprägniert ist, welche durch Absorbieren von Wärme verdampft; und
einen Beutel (320), welcher das absorbierende Material (310) abdichtet und aufnimmt; und
wobei der wenigstens eine wärmeabsorbierende Beutel (300) mit einem empfindlichen Teil (322) bereitgestellt ist, welcher dafür ausgelegt ist, zu brechen, wenn die in dem absorbierenden Material (310) imprägnierte Flüssigkeit verdampft, was zu einem Anstieg eines Innendrucks führt;
wobei die wenigstens eine Batteriezelle (200) eine Beuteltyp-Batteriezelle ist,
**dadurch gekennzeichnet, dass**
entgegengesetzte Enden der wenigstens einen Batteriezelle jeweils eine vorstehende Elektrodenleitung (210) aufweisen und
wobei der empfindliche Teil (322) des wenigstens einen wärmeabsorbierenden Beutels (300) an jedem den Elektrodenleitungen (210) entsprechenden Ende angeordnet ist.

2. Prismatische Sekundärbatterie (10) nach Anspruch 1, wobei die wenigstens eine Batteriezelle (200) eine Mehrzahl von Batteriezellen ist und
wobei der wenigstens eine wärmeabsorbierende Beutel (300) zwischen der Mehrzahl von Batteriezellen (200) angeordnet ist.

3. Prismatische Sekundärbatterie nach Anspruch 1, wobei der empfindliche Teil (322) des wenigstens einen wärmeabsorbierenden Beutels (300) an einer den Elektrodenleitungen (210) entsprechenden Position angeordnet ist.

4. Prismatische Sekundärbatterie (10) nach Anspruch 1, wobei das absorbierende Material eine superabsorbierende Matrix ist.

5. Prismatische Sekundärbatterie (10) nach Anspruch 4, wobei die superabsorbierende Matrix ein superabsorbierendes Polymer (SAP - Super Absorbent Polymer) oder eine superabsorbierende Faser (SAF - Super Absorbent Fiber) umfasst.

6. Prismatische Sekundärbatterie (10) nach Anspruch 5, wobei die Flüssigkeit Wasser ist, welches mit einem Additiv gemischt ist, und
wobei das Additiv eine Substanz, welche die Oberflächenspannung von Wasser reduziert, oder ein Feuerlöschmittel ist.

7. Prismatische Sekundärbatterie (10) nach Anspruch 1, wobei das Gehäuse (100) an beiden den Elektrodenleitungen (210) entsprechenden Enden des Gehäuses mit einer Entlüftung (150) ausgerüstet ist.

8. Prismatische Sekundärbatterie (10) nach Anspruch 7, wobei eine Prallplatte (400) mit einer Mehrzahl von Durchgangslöchern (410) zwischen der Entlüftung (150) und dem wenigstens einen wärmeabsorbierenden Beutel (300) angeordnet ist.

9. Prismatische Sekundärbatterie (10) nach Anspruch 8, wobei die Prallplatte (400) eine in Richtung der Entlüftung (150) konvex gekrümmte Fläche bildet.

## Revendications

1. Batterie secondaire prismatique (10) comprenant :
un boîtier (100) ;
au moins un élément de batterie (200) contenu dans le boîtier ; et
au moins une poche d'absorption de chaleur (300) en contact avec l'au moins un élément de batterie (200),
dans laquelle l'au moins une poche d'absorption de chaleur (300) comprend :
un matériau absorbant (310) imprégné d'un liquide qui est vaporisé en absorbant de la chaleur ; et
une poche (320) qui scelle et contient le matériau absorbant (310) ; et
dans laquelle l'au moins une poche d'absorption de chaleur (300) est pourvue d'une partie vulnérable (322) qui est conçue pour se rompre lorsque le liquide qui imprègne le matériau absorbant (310) est vaporisé, entraînant une augmentation de pression interne ;
dans laquelle l'au moins un élément de batterie (200) est un élément de batterie de type poche,
**caractérisée en ce que** les extrémités opposées de l'au moins un élément de batterie ont chacune une languette d'électrode (210) saillante, et
dans laquelle la partie vulnérable (322) de l'au moins une poche d'absorption de chaleur (300) est disposée à chaque extrémité correspondant aux languettes d'électrode (210).

2. Batterie secondaire prismatique (10) selon la revendication 1, dans laquelle l'au moins un élément de batterie (200) est une pluralité d'éléments de batterie (200), et dans laquelle l'au moins une poche d'absorption de chaleur (300) est agencée entre la pluralité d'éléments de batterie (200).

3. Batterie secondaire prismatique selon la revendication 1, dans laquelle la partie vulnérable (322) de l'au moins une poche d'absorption de chaleur (300) est disposée au niveau d'une position correspondant aux languettes d'électrode (210).

4. Batterie secondaire prismatique (10) selon la revendication 1, dans laquelle le matériau absorbant est une matrice superabsorbante.

5. Batterie secondaire prismatique (10) selon la revendication 4, dans laquelle la matrice superabsorbante comprend un polymère superabsorbant (SAP) ou une fibre superabsorbante (SAF).

6. Batterie secondaire prismatique (10) selon la revendication 5, dans laquelle le liquide est de l'eau mélangée à un additif, et
dans laquelle l'additif est une substance qui réduit la tension superficielle de l'eau, ou un agent extincteur contre l'incendie.

7. Batterie secondaire prismatique (10) selon la revendication 1, dans laquelle le boîtier (100) est équipé d'un évent (150) aux deux extrémités du boîtier correspondant aux languettes d'électrode (210).

8. Batterie secondaire prismatique (10) selon la revendication 7, dans laquelle un déflecteur (400) avec une pluralité de trous traversants (410) est disposé entre l'évent (150) et l'au moins une poche d'absorption de chaleur (300).

9. Batterie secondaire prismatique (10) selon la revendication 8, dans laquelle le déflecteur (400) forme une surface incurvée convexe vers l'évent (150).
